# EUROPEAN PATENT APPLICATION

(11) **EP 3 882 689 A1**
(43) Date of publication of application: **22.09.2021**
(21) Application number: 19883853.4
(22) Date of filing: 03.09.2019
(51) Int. Cl.: G02F 1/133, H01S 5/042, H04N 5/225

(54) **ELECTRONIC DEVICE**

(30) Priority: 16.11.2018 CN 201811369332
(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Ipside
(86) International application number: PCT/CN2019/104133
(87) International publication number: WO 2020/098344

(57) **Abstract**

An electronic device (1000), comprising a display screen (10) capable of self-illumination and a structured light assembly (20). The display screen (10) comprises multiple visible light sources (180) and at least one infrared light source (19); the structured light assembly (20) comprises a structured light projector (21) and a structured light camera (22), and the structured light projector (21) is configured to emit a laser pattern outwards the electronic device (1000); the structured light camera (22) is configured to receive an infrared and/or laser pattern reflected back by a target object.

## Description

### CROSS REFERENCE

The present application claims priority and interest of Chinese Patent Application No. 201811369332.1 filed on November 16, 2018, in the National Intellectual Property Administration of China, the entire contents of which are hereby incorporated by reference in its entirety.

### TECHNICAL FIELD

The present disclosure relates to the field of consumer electronics technologies, and in particular to an electronic device.

### BACKGROUND

The existing electronic device is arranged with a depth camera and an infrared floodlight. The depth camera may be configured to obtain depth information of an object. The infrared floodlight may supplement the light intensity of the depth camera in a weak light environment.

### SUMMARY OF THE DISCLOSURE

Embodiments of the present disclosure provides an electronic device.

The electronic device provided by the present disclosure includes a self-luminous display screen, including a plurality of visible light sources and at least one infrared light source; and a structured light assembly. The structured light assembly includes a structured light projector, configured to emit a laser pattern out of the self-luminous electronic device; and a structured light camera, configured to receive infrared light and/or the laser pattern reflected by a target object.

Additional aspects and advantages of the embodiments of the present disclosure will be partially given in the following description, and some will become apparent from the following description, or be learned through practice of the embodiments of the present disclosure.

### BRIEF DESCRIPTION OF THE DRAWINGS

The above and/or additional aspects and advantages of the present disclosure will become apparent and easily understood from the description of the embodiments in conjunction with the following drawings.
FIG. 1 is a structural schematic view of an electronic device according to an embodiment of the present disclosure.
FIG. 2 is a partial structural schematic view of an electronic device according to an embodiment of the present disclosure.
FIG. 3 is a schematic cross-sectional view of the electronic device according to an embodiment of the present disclosure taken along line A-A shown in FIG. 2.
FIG. 4 and FIG. 5 are partial structural schematic views of a display screen according to an embodiment of the present disclosure.
FIG. 6 is a structural schematic view of a structured light projector according to an embodiment of the present disclosure.
FIG. 7 is a schematic cross-sectional view of a position of the electronic device according to the embodiment of the present disclosure corresponding to the position along line A-A shown in FIG. 2.
FIG. 8 and FIG. 9 are partial structural schematic views of an electronic device according to an embodiment of the present disclosure.
FIG. 10 to FIG. 13 are schematic cross-sectional views of a position of the electronic device according to the embodiment of the present disclosure corresponding to the position along line A-A shown in FIG. 2.
FIG. 14 and FIG. 15 are scene schematic views of an electronic device according to an embodiment of the present disclosure.

### DETAILED DESCRIPTION

The embodiments of the present disclosure will be described by referring to the drawings and the embodiments. The same or similar reference numerals in the drawings indicate same or similar elements or the elements having same or similar functions throughout. In addition, the embodiments of the present disclosure described below with reference to the drawings are exemplary, only to explain the embodiments of the present disclosure, and cannot be construed as limiting the present disclosure.

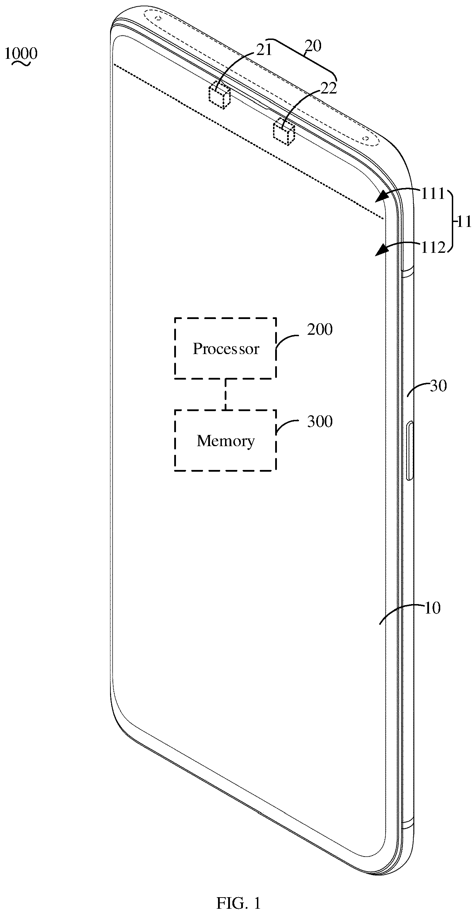

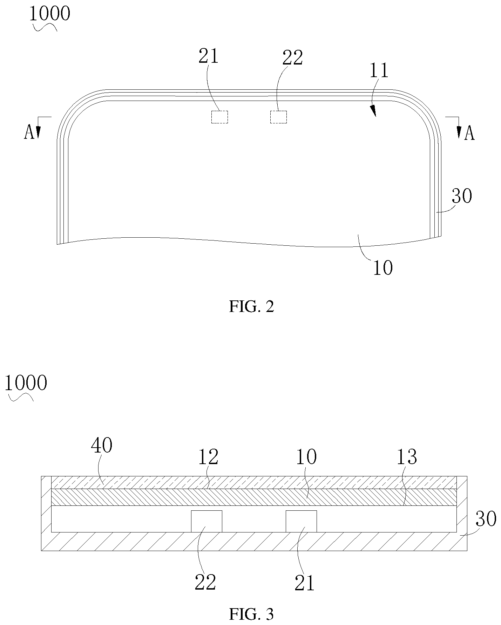

Referring to FIGS. 1 and 2, the electronic device 1000 according to the embodiments of the present disclosure includes a self-luminous display screen 10 and a structured light assembly 20. The display screen 10 includes a plurality of visible light sources 180 and at least one infrared light source 19. The structured light assembly 20 includes a structured light projector 21 and a structured light camera 22. The structured light projector 21 is configured to emit a laser pattern out of the electronic device 1000. The structured light camera 22 is configured to receive the infrared light and/or laser pattern reflected by a target object.

Referring to FIG. 1, FIG. 3 and FIG. 4, in some embodiments, the display screen 10 includes a front surface 12 and a rear surface 13 opposite to each other. The visible light emitted by the visible light sources 180 is emitted from the front surface 12 to an outside of the electronic device 1000. The structured light assembly 20 is arranged on a side on which the rear surface 13 is located.

Referring to FIG. 1, FIG. 3 and FIG. 4, in some embodiments, the electronic device 1000 further includes a housing 30. The display screen 10 is disposed on the housing 30. The display screen 10 includes a front surface 12, a rear surface 13, and a side surface. The front surface 12 is opposite to the rear surface 13, and the side surface is connected to the front surface 12 and the rear surface 13. The visible light emitted by the visible light sources 180 is emitted from the front surface 12 to an outside of the electronic device 1000. The structured light assembly 20 is disposed on the housing 30 and on a side at which the side surface is located.

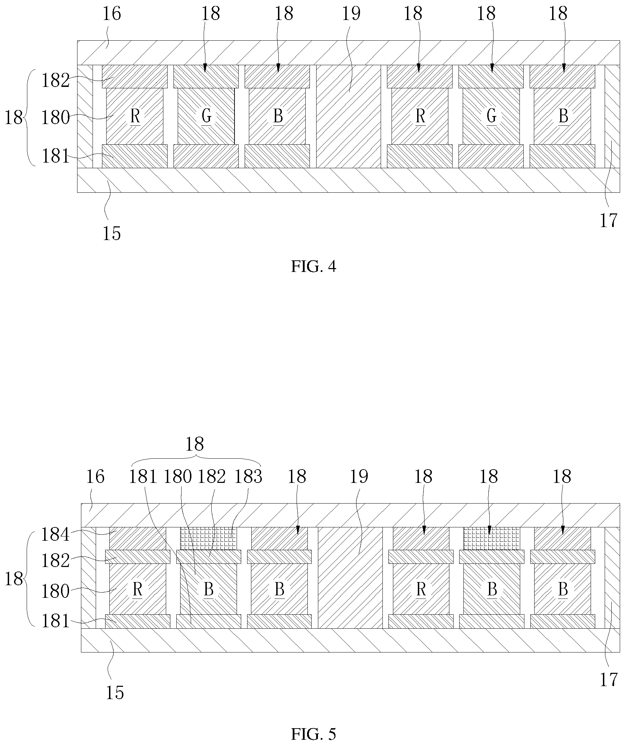

Referring to FIGS. 3 and 4, in some embodiments, the display screen 10 is a micro LED display screen. The display screen 10 further includes a drive substrate 15, a package substrate 16 opposite to the drive substrate 15, and a plurality of pixels 18 disposed between the package substrate 16 and the drive substrate 15. Each pixel 18 is correspondingly arranged with a visible light source 180. The at least one infrared light source 19 is disposed among the plurality of visible light sources 180.

Referring to FIG. 4, in some embodiments, the display screen 10 further includes a support 17 separating the drive substrate 15 and the package substrate 16.

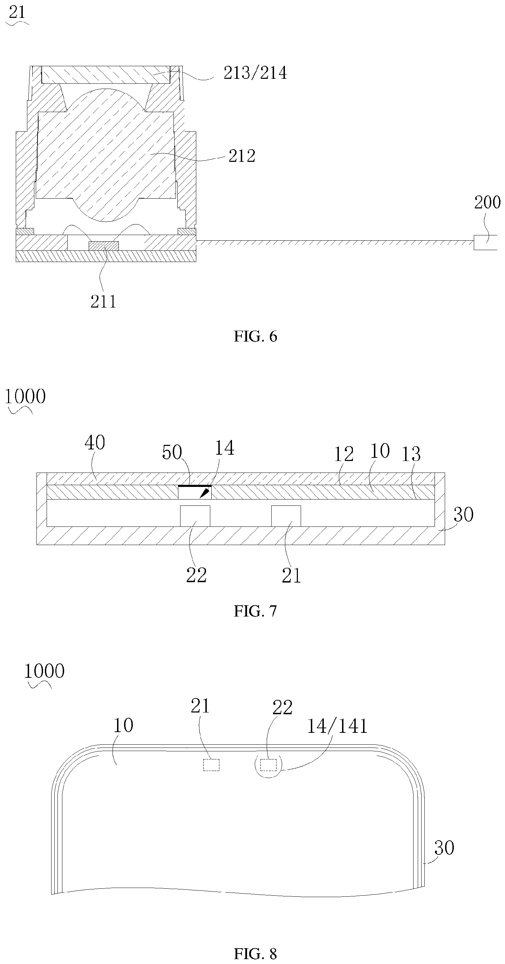

Referring to FIGS. 1 and 7, in some embodiments, the display screen 10 includes a display area 11 and a non-display area. The non-display area is formed on a periphery of the display area. The structured light projector 21 and the structured light camera 22 are disposed on a side at which the rear surface of the display screen 10 is located and face the display area 11. The display area 11 defines a through slot 14 penetrating the front surface 12 and the rear surface 13. The structured light camera 22 is arranged facing the through slot 14.

Referring to FIG. 8, in some embodiments, the through slot 14 includes a notch 141 defined on an edge of the display screen 10.

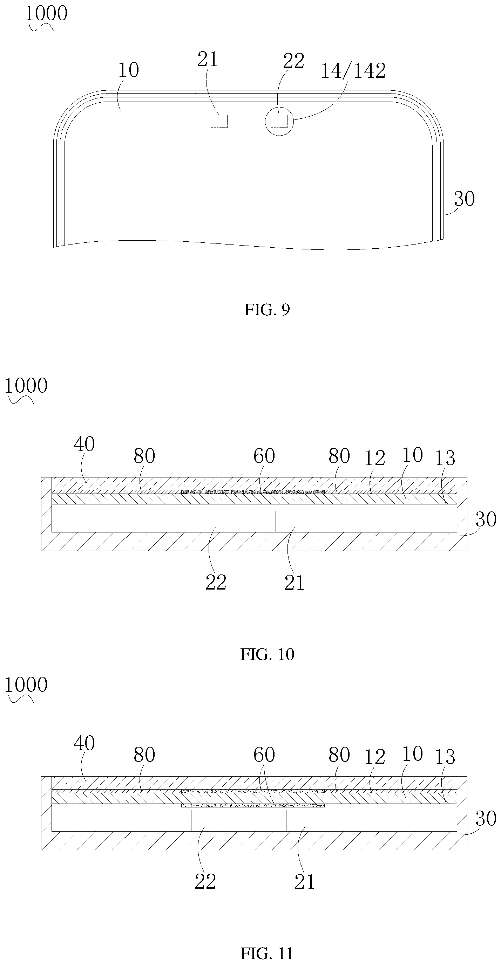

Referring to FIG. 9, in some embodiments, the through slot 14 includes a through hole 142 spaced from the edge of the display screen 10.

Referring to FIG. 1, in some embodiments, the display area 11 includes a first sub-display area 111 and a second sub-display area 112 connected to each other. The pixel density of the first sub-display area 111 is less than that of the second sub-display area 112. The structured light projector 21 is disposed on a side corresponding to the first sub-display area 111.

Referring to FIG. 1, in some embodiments, the first sub-display area 111 and the second sub-display area 112 may be independently controlled and displayed in different display states. The display state may include brightness or refresh frequency.

Referring to FIG. 1, in some embodiments, the electronic device 1000 further includes a processor 200 configured to reduce the brightness of the first sub-display area 111 when the structured light projector 21 emits a laser pattern; or, to adjust the refresh frequency of the first sub-display area 111 such that the turn-on time of the first sub-display area 111 and the turn-on time of the structured light projector 21 are staggered.

Referring to FIG. 7, in some embodiments, the electronic device 1000 further includes a cover plate 40 and an infrared transmission layer 50. The cover plate 40 is disposed on the front surface 12 of the display screen 10. The infrared transmission layer 50 is disposed at an area of the cover plate 40 corresponding to the through slot 14 and/or an area of the cover plate 40 corresponding to the structured light camera 22.

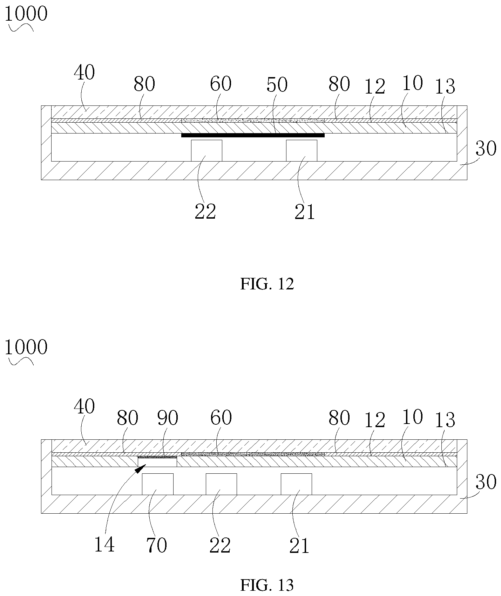

Referring to FIG. 13, in some embodiments, the electronic device 1000 further includes a visible light camera 70 disposed facing the through slot 14. A visible light antireflection film 80 and/or an infrared cut film 90 is formed at an area of the cover plate 40 corresponding to the through slot 14.

Referring to FIG. 10, in some embodiments, the electronic device 1000 further includes an infrared antireflection film 60; the infrared antireflection film 60 is disposed at an area of the display screen 10 corresponding to the structured light projector 21, and/or at an area of the display screen 10 corresponding to the structured light camera 22.

Referring to FIG. 10, in some embodiments, the electronic device 1000 further includes a cover plate 40 and an infrared antireflection film 60. The cover plate 40 is disposed on the front surface 12 of the display screen 10. The infrared antireflection film 60 is disposed at an area of the cover plate 40 corresponding to the structured light projector 21 and/or at an area of the cover plate 40 corresponding to the structured light camera 22.

Referring to FIGS. 3 and 4, in some embodiments, the infrared light source 19 and the visible light source 180 may be controlled separately. When the infrared light source 19 emits infrared light, the structured light camera 22 is configured to obtain an infrared image, and the visible light source 180 does not emit light to turn off the display screen 10. Or, when the infrared light source 19 emits light, the structured light camera 22 is configured to obtain an infrared image, and the visible light source 180 emits light to cause the display screen 10 to display images. Or, when the infrared light source 19 does not emit light, the visible light source 19 emits light to cause the display screen 10 to display images.

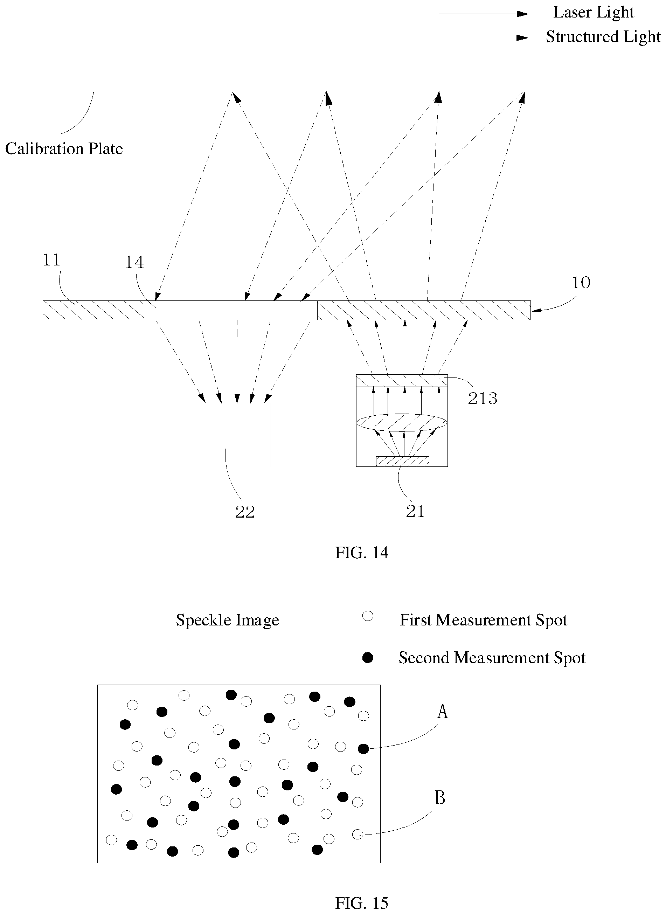

Referring to FIGS. 1 and 14, in some embodiments, the electronic device 1000 further includes a processor 200. The structured light camera 22 is configured to receive a laser pattern that is diffracted by the display area 11 and reflected by the target object when the laser pattern emits and directly incident, such that a speckle image is obtained. The speckle image includes a plurality of measurement spots. The plurality of measurement spots include first measurement spots and second measurement spots. The first measurement spots are formed by the laser light diffracted only by a diffractive optical element 213 and reflected by the target object. The second measurement spots are formed by the laser light diffracted by the diffractive optical element 213 once, diffracted by the display screen 10 again, and reflected by the target object. The processor 200 is configured to obtain a depth image based on the first measurement spots and the second measurement spots in the speckle image and reference spots in a reference image.

Referring to FIGS. 1 and 14, in some embodiments, the electronic device 1000 further includes a processor 200. The structured light camera 22 is configured to receive a laser pattern diffracted by the display area 11 and reflected by the target object when the laser pattern emits and directly incident, such that a speckle image is obtained. The speckle image includes a plurality of measurement spots. The plurality of measurement spots includes first measurement spots and second measurement spots. The first measurement spots are formed by the laser light diffracted only by a diffractive optical element 213 and reflected by the target object. The second measurement spots are formed by the laser light diffracted by the diffractive optical element 213 once, diffracted by the display screen 10 again, and reflected by the target object. The processor 200 is configured to filter out the second measurement spots in the speckle image to obtain the first measurement spots, and obtain a depth image based on the first measurement spots and reference spots in a reference image.

Referring to FIG. 1, in some embodiments, the processor 200 is further configured to determine whether a ratio of the brightness of a measured spot to a preset brightness is greater than a preset ratio. When the ratio of the brightness of the measured spot to the preset brightness is greater than the preset ratio, the measured spot is determined to be a first measurement spot. When the ratio of the brightness of the measured spot to the preset brightness is less than the preset ratio, the measured spot is determined to be a second measurement spot.

Referring to FIG. 1, in some embodiments, the preset brightness and the preset ratio are determined based on an ambient brightness of the scene and a luminous power of the structured light projector 21.

Referring to FIGS. 1 and 2, the electronic device 1000 according to the embodiments of the present disclosure includes a display screen 10 and a structured light assembly 20. The electronic device 1000 may further include a housing 30, and functional devices such as the display screen 10, the structured light assembly 20 may be arranged at the housing. The functional devices may also be a main board, a dual camera module, a receiver, etc. A specific form of the electronic device 1000 may be a mobile phone, a tablet computer, a smart watch, a head-mounted display device, etc. In the present disclosure, the electronic device 1000 is a mobile phone as an example for description. It can be understood that the specific form of the electronic device 1000 is not limited to a mobile phone and is not limited herein.

The display screen 10 may be arranged on the housing 30. Specifically, the display screen 10 may be arranged on a surface of the housing 30 or on two opposite surfaces of the housing 30. In the example shown in FIG. 1, the display screen 10 is arranged on a front surface of the housing 30, and the display screen 10 may cover 85% or more of the area of the front surface. For example, the ratios may be 85%, 86%, 87%, 88%, 89%, 90%, 91%, 92%, 93%, 95% and even 100%. The display screen 10 may be configured to display images. The images may be text, images, videos, icons, and other information. A specific type of the display screen 10 may be a self-luminous display screen such as Micro LED. The display screen 10 includes a display area 11, which may be configured to display images. To adapt to the needs of different types of electronic devices 1000 and different users, the shape of the display area 11 may be substantially circular, elliptical, racetrack, rounded rectangle, rectangular, etc.

Further referring to FIG. 3 and FIG. 4, the display screen 10 includes a front surface 12 and a rear surface 13 opposite to each other. The front surface 12 may be configured to display images, and the user may observe the images from the display area 11 of the front surface 12.

The display screen 10 includes a drive substrate 15, a package substrate 16, a support 17, a plurality of pixels 18 and at least one infrared light source 19. The drive substrate 15 and the package substrate 16 are oppositely arranged. The plurality of pixels 18 and the at least one infrared light source 19 are arranged between the drive substrate 15 and the package substrate 16. Each pixel 18 is correspondingly arranged with a visible light source 180. The at least one infrared light source 19 is disposed among the plurality of visible light sources 180.

The drive substrate 15 is arranged with a display drive circuit (not shown). The drive substrate 15 may be configured to control the turning on and off and the brightness of the light source of each pixel 18. The package substrate 16 is configured to encapsulate and protect the light source. The material of the package substrate 16 may be polyethylene terephthalate (PET), polycarbonate (PC) or other plastic with a certain hardness, or glass. The support 17 is configured to maintain a certain distance between the drive substrate 15 and the package substrate 16 and prevent excessive compression of the pixels 18.

Each pixel 18 further includes a lower pixel electrode 181 and an upper pixel electrode 182. The lower pixel electrode 181 is disposed on the drive substrate 15, the upper pixel electrode 182 is disposed under the package substrate 16, and the visible light source 180 is interposed between the lower pixel electrode 181 and the upper pixel electrode 182. The material of the pixel electrode may be indium tin oxide or conductive metal.

As shown in FIG. 4, in an example, one infrared light source 19 is disposed among the plurality of visible light sources 180. The plurality of visible light sources 180 include a red light source, a green light source, and a blue light source. Each visible light source 180 is associated with a corresponding pixel electrode to form a pixel 18, such that pixels 18 containing different light sources emit different colors of light.

Referring to FIG. 5, in another example, the structure of the pixel 18 may also include a visible light source 180 and a color conversion layer 183. For example, the plurality of visible light sources 180 include a red light source and a blue light source. Each visible light source 180 and a corresponding pixel electrode form a pixel 18 emitting light of a corresponding color. Pixels 18 containing a red light source emit red light, pixels 18 containing a blue light source emit blue light, and pixels 18 containing a blue light source and the color conversion layer 183 emit green light. The pixel 18 further includes a spacer layer 184, which facilitates the uniformity of the height of the pixels 18.

The pixels 18 in the display area 11 exhibit corresponding colors under the effect of self-illumination. One pixel 18 and another pixel 18 (for example, adjacent pixel electrodes) usually have a microscopic gap therebetween, and the light diffracts when passing through the microscopic gap.

In some examples, the display screen 10 may further include a non-display area. The non-display area may be formed on the periphery of the display area 11. The non-display area may not be configured for display, and may be configured for combining with the housing 30 or for wiring. For example, the non-display area may be combined with the housing 30 by viscose without affecting the display function of the display area 11. The display screen 10 may also be a touch display screen integrated with a touch control function. After the user obtains the image information displayed on the display screen 10, the user may perform touch control on the display screen 10 to achieve a predetermined interactive operation.

The structured light assembly 20 may obtain the depth information of the target object based on the laser pattern for three-dimensional modeling, generating three-dimensional images, ranging and the like. The structured light assembly 20 may be arranged in the housing 30 of the electronic device 1000. Specifically, after the structured light assembly 20 is disposed on a bracket, the bracket and the structured light assembly 20 may be arranged in the housing 30 together. The structured light assembly 20 and the bracket may be disposed at a side where the rear surface 13 of the display screen 10 is located. Of course, in other embodiments, the display screen 10 further includes a side surface connecting the front surface 12 and the rear surface 13. The structured light assembly 20 may also be disposed on a side of the housing 30 on which the side surface is located. Or, the display screen 10 defines a through hole, and the structured light assembly 20 is exposed through the through hole.

Referring to FIGS. 1 and 3. The structured light assembly 20 may include a structured light projector 21 and a structured light camera 22. The structured light projector 21 is disposed on the side on which the rear surface 13 of the display screen 10 is located. Or to say, the structured light projector 21 is disposed under the display area 11. The structured light projector 21 is configured to emit a laser pattern passing through the display area 11. Specifically, referring to FIG. 6, the structured light projector 21 may include a light source 211, a collimating element 212 and a diffractive optical element 213. The light (such as infrared laser) emitted by the light source 211 is collimated by the collimating element 212 and diffracted by the diffractive optical element 213 to emit from the structured light projector 21, and then passes through the display area 11 to project to the outside. Both the microscopic gap of the display area 11 and the diffractive structure of the diffractive optical element 213 have a diffractive effect on the light emitted by the light source 211.

The laser pattern passing through the display area 11 and entering the outside world may contain both a pattern diffracted by the diffractive optical element 213 (that is, the pattern includes a plurality of spots diffracted by the diffractive optical element 213) and a pattern diffracted by the microscopic gap of the display screen 10 (that is, the pattern includes a plurality of spots diffracted by the diffractive optical element 213 and diffracted by the display screen 10). In this way, the speckle pattern after passing through the display area 11 has a high irrelevance, which is beneficial to subsequent process to the speckle pattern. In an example, the transmittance of the display area 11 may reach 60% or more, such that the laser pattern emitted by the structured light projector 21 passes through the display area 11 with less loss.

The structured light camera 22 may be an infrared camera. After the laser pattern is emitted to the target object, and modulated by the target object, the laser pattern may be obtained by the structured light camera 22. The structured light camera 22 receives the modulated laser pattern to obtain the speckle image. The speckle image is processed to obtain the depth data of the target object. The structured light camera 22 may be arranged on the side on at which the rear surface 13 of the display screen 10 is located, that is, the structured light camera 22 may be arranged under the display screen 10. Specifically, the structured light camera 22 may be arranged on the same bracket as the structured light projector 21, or the structured light camera 22 is directly installed on the housing 30. The light incident surface of the structured light camera 22 may be aligned with the display area 11. The laser pattern modulated by the target object passes through the display area 11 and then received by the structured light camera 22. Specifically, the laser pattern modulated by the target object may be diffracted by the microscopic gap of the display screen 10 and then received by the structured light camera 22.

Further referring to FIG.4, the infrared light source 19 in the display screen 10 may be configured in conjunction with the structured light assembly 20. The infrared light source 19 may be configured to emit supplementary light outward. The supplementary light may be configured to supplement the light intensity in the environment when the ambient light is weak. In an example, the supplementary light may be infrared light. After the supplementary light is emitted onto the target object and reflected by the target object, the supplementary light may be obtained by the structured light camera 22 to obtain a two-dimensional image of the target object. The two-dimensional image information may be configured for identity recognition. The supplementary light emitted by the infrared light source 19 passes through the microscopic gap of the display area 11 and enters the external environment. The reflected supplementary light may again pass through the microscopic gap to be received by the structured light camera 22.

The infrared light source 19 and the visible light source 180 may be controlled independently. When the infrared light source 19 emits infrared light, the structured light camera 22 is configured to obtain the infrared image, and the visible light source 180 does not emit light to turn the display screen 10 off. The user may thus perform face recognition, payment unlocking, and the like based on infrared images in cases of the screen being off.

In some examples, when the infrared light source 19 emits light, the structured light camera 22 is configured to obtain the infrared image, and the visible light source 180 emits light to cause the display screen 10 to display an image. The user may thus perform face recognition, payment unlocking, and the like based on infrared images in cases of the screen being on.

In some examples, when the infrared light source 19 does not emit light, the visible light source 180 emits light to cause the display screen 10 to display an image.

In summary, the electronic device 1000 of the embodiments of the present disclosure functions as an infrared floodlight by integrating the infrared light source 19 on the display screen 10, sparing an additional use of a separate infrared floodlight. In the prior art, the infrared floodlight is usually arranged on the display screen and exposed through an opening, which leads to a relatively low screen occupation of the electronic device. Compared with that, the technical solutions provided by the present disclosure may reduce the space of the infrared floodlight in the structured light assembly 20 occupying the surface of the display screen 10, thereby increasing the screen ratio of the electronic device 1000. In addition, the reduced number of components in the structured light assembly 20 is also beneficial to simplify the structure of the structured light assembly 20. Since the structured light projector 21 is disposed on the side on which the rear surface 13 of the display screen 10 is located, and the laser pattern emitted by the structured light projector 21 passes through the display area 11 and enters the external environment, the display screen 10 is not required to define an opening aligned with the structured light projector 21, the screen area of the electronic device 1000 may be thus greater.

Referring to FIG. 7, in some embodiments, the display screen 10 defines a through slot 14, and the through slot 14 does not have a display function. The through slot 14 penetrates the front surface 12 and the rear surface 13. Since the structured light camera 22 is arranged on the side on which the rear surface 13 of the display screen 10 is located, the structured light camera 22 is configured to receive the modulated laser pattern passing through the through slot 14.

The light incident surface of the structured light camera 22 may be aligned with the through slot 14, and the laser pattern modulated by the target object passes through the through slot 14 and then received by the structured light camera 22. In the embodiments, since the modulated laser pattern is not required to pass through the microscopic gap of the display area 11, the modulated laser pattern will not be diffracted again by the microscopic gap. That is, the speckle image obtained by the structured light camera 22 is the speckle image after modulation of the target object, thereby reducing the difficulty of subsequent calculation of depth image based on speckle image.

Specifically, in the example shown in FIG. 8, the through slot 14 includes a notch 141 defined on the edge of the display screen 10. Or to say, the through slot 14 intersects the edge of the display screen 10. The notch 141 may be specifically defined on any one or more edges such as the upper edge, the lower edge, the left edge, and the right edge of the display screen 10. The shape of the notch 141 may be any shape such as a triangle, a semicircle, a rectangle, a track shape, etc., which is not limited herein.

In the example shown in FIG. 9, the through slot 14 includes a through hole 142 spaced from the edge of the display screen 10. Or to say, the through slot 14 is defined within a range enclosed by the edge of the display screen 10. The through hole 142 may specifically be close to any one or more edges such as the upper edge, the lower edge, the left edge, and the right edge of the display screen 10. The shape of the through hole 142 may be any shape such as a triangle, a circle, a rectangle, and a racetrack, which is not limited herein.

In some examples, the through slot 14 may also include the aforementioned notch 141 and the through hole 142 at the same time. The number of the notch 141 and that of the through hole 142 may be equal or unequal.

Referring to FIG. 3, FIG. 5 and FIG. 7, in some embodiments, the electronic device 1000 further includes a cover plate 40. The cover plate 40 is disposed on the side on which the front surface 12 of the display screen 10 is located. Referring to FIG. 7, when the display panel 10 defines the through slot 14, an infrared transmission layer 50 is arranged on the area of the cover plate 40 corresponding to the through slot 14.

The cover plate 40 may be made of a material with good light transmission performance, such as glass or sapphire. The material of the infrared transmission layer 50 may be an infrared transmission ink or an infrared transmission film. The infrared transmission layer 50 has a high transmittance for infrared light (for example, light with a wavelength of 940 nanometers). For example, the transmittance may reach 85% or more. The transmittance of light other than infrared light is low, or the light other than infrared light is completely impermeable. Therefore, it is difficult for the user to see the structured light camera 22 aligned with the through slot 14 through the cover plate 40, improving the appearance of the electronic device 1000. Of course, when the display screen 10 defines the through slot 14, the area corresponding to the structured light projector 21 of the cover plate 40 may also be arranged with the infrared transmission layer 50.

Referring to FIG. 1 again, in some embodiments, the display area 11 includes a first sub-display area 111 and a second sub-display area 112. The laser pattern emitted by the structured light projector 21 passes through the first sub-display area 111, and the pixel density of the first sub-display area 111 is less than that of the second sub-display area 112.

The pixel density of the first sub-display area 111 is less than the pixel density of the second sub-display area 112. That is, the microscopic gap of the first sub-display area 111 is greater than the microscopic gap of the second sub-display area 112. The blocking effect of light of the first sub-display area 111 is small, and the transmittance of light passing through the first sub-display area 111 is high. Therefore, the laser pattern emitted by the structured light projector 21 has a high transmittance through the first sub-display area 111.

In an example, the first sub-display area 111 may be configured to display a state icon of the electronic device 1000, for example, to display a battery level, network connection status, system time, etc. of the electronic device 1000. The first sub-display area 111 may be located near the edge of the display area 11, and the second sub-display area 112 may be located in the middle of the display area 11.

Referring to FIG. 1 again, in some embodiments, the display area 11 includes a first sub-display area 111 and a second sub-display area 112. The laser pattern emitted by the structured light projector 21 passes through the first sub-display area 111. The first sub-display area 111 and the second sub-display area 112 may be independently controlled and displayed in different display states. The pixel density of the first sub-display area 111 and the pixel density of the second sub-display area 112 may be equal. Or, the pixel density of the first sub-display area 111 is less than the pixel density of the second sub-display area 112.

The display states may be on or off, display with different brightness, display with different refresh frequency, etc. The display states of the first sub-display area 111 and the second sub-display area 112 may be independently controlled. The user may control the normal display of the second sub-display area 112 according to actual needs, and the first sub-display area 111 cooperates with the structured light projector 21 for use. For example, when the structured light projector 21 emits a laser pattern, the first sub-display area 111 may be turned off, or the display brightness of the first sub-display area 111 may be lowered, or the refresh frequency of the first sub-display area 111 may be adjusted such that the turn-on time of the first sub-display area 111 is staggered from the turn-on time of the structured light projector 21. In this way, the influence of the displaying first sub-display area 111 on the structured light projector 21 projecting the speckle pattern onto the scene may be reduced. When the structured light projector 21 is not activated, both the first sub-display area 111 and the second sub-display area 112 may be turned on and displayed at a same refresh frequency.

Referring to FIG. 10, in some embodiments, the electronic device 1000 further includes a cover plate 40. The cover plate 40 is disposed on the side on which the front surface 12 of the display screen 10 is located. The infrared antireflection film 60 is formed on the area of the cover plate 40 corresponding to the structured light projector 21.

The infrared antireflection film 60 can increase the transmittance of infrared light. When the structured light projector 21 projects an infrared laser, the infrared antireflection film 60 can increase the transmittance of the infrared laser through the cover plate 40 to reduce the loss of the infrared laser penetrating the cover plate 40, thereby reducing the power consumption of the electronic device 1000. Specifically, the infrared antireflection film 60 may be plated on the upper surface, or the lower surface of the cover plate 40, or on both the upper surface and the lower surface.

Of course, an area on the cover plate 40 corresponding to the structured light camera 22 may also be formed with the infrared antireflection film 60 to reduce the loss of external infrared light passing through the cover plate 40 before reaching the structured light camera 22. The area on the cover plate 40 that does not correspond to the structured light projector 21 and the structured light camera 22 may be formed with a visible light antireflection film 80 to increase the transmittance of the visible light emitted by the display screen 10 when passing through the cover plate 40.

In an example, when a position of the display screen 10 corresponding to the structured light projector 21 defines a through slot 14, the area on the cover plate 40 corresponding to the structured light projector 21 may also be formed with the infrared antireflection film 60. Or, when a position of the display screen 10 corresponding to the structured light camera 22 defines the through slot 14, the area on the cover plate 40 corresponding to the structured light camera 22 may also be formed with the infrared antireflection film 60.

Referring to FIG. 11, in some embodiments, when the display screen 10 is free of the through slot 14 defined thereon, the area on the display screen 10 corresponding to the structured light projector 21 may be formed with the infrared antireflection film 60.

The infrared antireflection film 60 can increase the transmittance of infrared light. When the structured light projector 21 projects an infrared laser, the infrared antireflection film 60 can increase the transmittance of the infrared laser through the display screen 10 to reduce the loss of the infrared laser penetrating the display screen 10, thereby reducing the power consumption of the electronic device 1000. Specifically, the infrared antireflection film 60 may be plated on the upper surface, or the lower surface of the display screen 10, or on both the upper surface and the lower surface. In an example, the infrared antireflection film 60 may also be formed inside the display screen 10. For example, the display screen 10 of the present disclosure is a liquid crystal display, and the infrared antireflection film 60 may be formed on a polarizer in the display screen 10, or formed on an electrode plate of the display screen 10, etc.

Of course, when the display screen 10 is free of the through slot 14 defined thereon, the area on the display screen 10 corresponding to the structured light camera 22 may also be formed with the infrared antireflection film 60.

Referring to FIG. 12, in some embodiments, when the display screen 10 is free of the through slot 14 defined thereon, an infrared transmission layer 50 may be formed on the area of the display screen 10 corresponding to the structured light projector 21. As described above, the infrared transmission layer 50 has a high transmittance for infrared light, and a low transmittance for light other than infrared light (such as visible light) or makes the light other than infrared light (such as visible light) completely impermeable. In this way, it is difficult for the user to see the structured light projector 21.

Of course, when the display screen 10 is free of the through slot 14 defined thereon, the infrared transmission layer 50 may also be formed on the area of the display panel 10 corresponding to the structured light camera 22. The infrared transmission layer 50 can reduce the influence of the light other than infrared light passing through the display screen 10 on the structured light camera 22.

Referring to FIG. 13, in some embodiments, the display screen 10 defines a through slot 14 penetrating the front surface 12 and the rear surface 13. The electronic device 1000 further includes a visible light camera 70 aligned with the through slot 14. A visible light antireflection film 80 and/or an infrared cut film 90 are formed on the area of the cover plate 40 corresponding to the through slot 14.

The visible light camera 70 may be configured to receive visible light passing through the cover plate 40 and the through slot 14 to obtain images. The visible light antireflection film 80 is formed on the area of the cover plate 40 corresponding to the through groove 14 to increase the transmittance of visible light when passing through the cover plate 40, thereby improving the imaging quality of the visible light camera 70. The infrared cut film 90 is formed on the area of the cover plate 40 corresponding to the through slot 14 to reduce the transmittance of infrared light when passing through the cover plate 40, or completely prevent infrared light from entering the visible light camera 70, thereby reducing the impact of infrared light to the visible light camera 70 when imaging.

Referring to FIG. 1, FIG. 7 and FIG. 14, in some embodiments, the structured light projector 21 and the structured light camera 22 are arranged together on a side at which the rear surface 13 of the display screen 10 is located. The display screen 10 defines the through slot 14 aligned with the light incident surface of the structured light camera 22. The structured light camera 22 receives a modulated laser pattern passing through the through slot 14. The electronic device 1000 also includes a processor 200. The processor 200 may be configured to control the structured light camera 22 to receive a laser pattern that is diffracted by the display area 11 and reflected by the target object when the laser light emitting and directly incident to obtain a speckle image. The speckle image includes a plurality of measurement spots. The plurality of measurement spots include first measurement spots and second measurement spots. The first measurement spots are formed by the laser light diffracted only by a diffractive optical element 213 and reflected by the target object. The second measurement spots are formed by the laser light diffracted by the diffractive optical element 213 once, diffracted by the display screen 10 again, and reflected by the target object. The processor 200 is configured to obtain a depth image based on the first measurement spots and the second measurement spots in the speckle image and reference spots in a reference image.

Specifically, after the structured light projector 21 is activated, a laser pattern can be projected into the scene. The laser pattern projected into the scene will form a speckle pattern with multiple spots. Due to the different distances between multiple target objects in the scene and the structured light projector 21, the speckle pattern projected onto the target object will be modulated due to the difference in the height of the target object surface, such that spots of the speckle pattern are shifted to different degrees. The shifted spots are collected by the structured light camera 22, and the speckle image including the plurality of measurement spots may be formed. After the processor 200 obtains the speckle image, the processor 200 may calculate the depth data of pixels based on the deviations of the measurement spots in the speckle image relative to the reference spots in the reference image. Multiple pixels with depth data may form a depth image. The reference image may be obtained by calibration in advance.

Further referring to FIG. 6, the structured light projector 21 generally includes a light source 211, a collimating element 212 and a diffractive optical element 213. The light source 211 is configured to emit laser light. The collimating element 212 is configured to collimate the laser light emitted by the light source 211. The diffractive optical element 213 is configured to diffract the laser light collimated by the collimating element 212 to project the laser pattern into the scene. The laser pattern projected to the scene forms the speckle pattern. The speckle pattern includes a plurality of spots, which are formed by the diffraction of the laser light only through the diffractive optical element 213.

The display area 11 of the self-luminous display screen 10 such as a Micro LED screen is usually formed with a fixed pixel arrangement structure. Microscopic gaps are formed between adjacent pixels. When a single-point laser passes through the microscopic gap, the laser will be diffracted to produce a series of spots. When the pixel arrangement structure in the display area 11 is different, the arrangement of the spots of the speckle pattern formed after the single-point laser passes through the display area 11 is also different. The laser pattern emitted by the structured light projector 21 is usually an infrared laser. In this way, when the structured light projector 21 is disposed on a side at which the rear surface 13 of the display screen 10 is located, that is, under the display screen 10, the infrared laser emitted by the structured light projector 21 passing through the display area 11 will also be diffracted by the microscopic gap to produce a speckle pattern with spots. Thus, the spots of the speckle pattern projected to the scene by the structured light projector 21 include first measurement spots and second measurement spots. The first measurement spots are formed by the laser light diffracted only by the diffractive optical element 213. The second measurement spots are formed by the laser light diffracted by the diffractive optical element 213 once, and diffracted by the display screen 10 again.

When the structured light camera 22 is imaging, the structured light camera 22 receives the laser pattern reflected by the target object in the scene to form a speckle image. In the embodiments of the present disclosure, the display screen 10 defines the through slot 14, the light incident surface of the structured light camera 22 is aligned with the through slot 14, and the through slot 14 does not have the microscopic gap. In this way, the reflected laser after being diffracted by the diffractive optical element 213 once, diffracted by the display screen again, and modulated by the target object will not be diffracted when passing through the slot 14. The structured light camera 22 receives the laser pattern directly incident after being diffracted by the display area 11 and reflected by the target object. The plurality of measurement spots of the formed speckle image include first measurement spots and second measurement spots. The first measurement spots are formed by the laser light diffracted only by a diffractive optical element 213 and reflected by the target object. The second measurement spots are formed by the laser light diffracted by the diffractive optical element 213 once, diffracted by the display screen 10 again, and reflected by the target object.

After the speckle image is captured by the structured light camera 22, the processor 200 may directly calculate the depth image based on the first measurement spots and the second measurement spots in the speckle image and the reference spots in the reference image. The calculation method of the depth image may include the following two.

In a calculation mode, the processor 200 may also be configured to calculate the deviations of all measurement spots relative to all reference spots and calculate depth data based on the deviations to obtain the depth image. The processor 200 may also be configured to control the structured light camera 22 to, when a reference image is calibrated, receive a laser pattern that is diffracted by the display area 11 after being emitted and reflected by a calibration object to be directly incident to obtain the reference image. The reference image includes a plurality of reference spots.

Specifically, referring to FIG. 14, in the process of calibrating the reference image, the structured light projector 21 and the structured light camera 22 are arranged together on a side at which the rear surface 13 of the display screen 10 is located. The display screen 10 defines the through slot 14 aligned with the light incident surface of the structured light camera 22. The structured light camera 22 may receive the modulated laser pattern passing through the through slot 14. That is, in a calibration scene and an actual scene, the arranged positions of the structured light projector 21 and the structured light camera 22 relative to the display screen 10 are the same. In the calibration scene, the processor 200 controls the structured light projector 21 to emit a laser pattern. After passing through the display area 11, the laser pattern is projected onto a calibration object (such as a calibration plate) at a predetermined distance from the structured light assembly 20, reflected back by the calibration plate, and then passes through the through slot 14 to be received by the structured light camera 22. In this case, the structured light camera 22 receives the laser pattern emitted by the structured light projector 21, diffracted by the display screen 10 and reflected by the calibration plate, and then directly incident through the through slot 14. The formed reference image includes a plurality of reference spots. The reference spots include first reference spots corresponding to the first measurement spots and second reference spots corresponding to the second measurement spots. The first reference spots are formed by the laser light diffracted by the diffractive optical element 213 when passing through the diffractive optical element 213, not diffracted by the display screen 10 when passing through the display screen 10, and modulated and reflected by the calibration plate. The second reference spots are formed by the laser light diffracted by the diffractive optical element 213 once when passing through the diffractive optical element 213, diffracted again by the display screen 10 when passing through the display screen 10, and modulated and reflected by the calibration plate. Although the speckle image includes both the first measurement spots and the second measurement spots, and the reference image includes both the first reference spots and the second reference spots, in the calculation method, the processor 200 does not distinguish the first measurement spots and the second measurement spots in the speckle image, and does not distinguish the first reference spots and the second reference spots in the reference image. Replaced by that, the calculation of the depth image is directly based on all the measurement spots and all the reference spots. Specifically, the processor 200 first calculates the deviations of all measurement spots relative to all reference spots, and then calculates multiple depth data based on the deviations, thereby obtaining the depth image.

In another calculation method, the processor 200 may also be configured to, when the reference image is calibrated, control the structured light camera 22 to receive the laser pattern directly reflected by the calibrated object after being emitted from the structured light projector 21 and directly incident to obtain a first reference image (hereby the first reference image includes a plurality of reference spots, and the plurality of reference spots include a plurality of first reference spots formed by laser light diffracted by the diffractive optical element 213 and reflected by the calibration object). The processor 200 may be further configured to, when the reference image is calibrated, control the structured light camera 22 to receive the laser pattern diffracted by the display area 11, reflected by the calibration object when being emitted, and directly incident to obtain a second reference image (hereby the second reference image includes a plurality of reference spots, and the plurality of reference spots include first reference spots and second reference spots. The first reference spots are formed by the laser light diffracted only by the diffractive optical element 213 and reflected by the calibration object. The second reference spots are formed by the laser light diffracted by the diffractive optical element 213 once, diffracted again by the display screen 10, and reflected by the calibration object). Then, the processor 200 may be further configured to: compare the first reference image with the second reference image to obtain the second reference spots, calculate a ratio between an average value of the brightness of the second reference spots and an average value of the brightness of the first reference spots as a preset ratio, and calculate an average value of the brightness of the first reference spots as a preset brightness. The processor 200 may also be configured to calculate an actual ratio between each measurement spot and the preset brightness, classify the measurement spots of which the actual ratio is greater than the preset ratio as the first measurement spots, and classify the measurement spots of which the actual ratio is less than the preset ratio as the second measurement spots. The processor 200 may be further configured to calculate the deviations of the first measurement spots relative to the first reference spots, and the deviations of the second measurement spots relative to the second reference spots, and calculate depth data based on the deviations to obtain the depth image.

In the calculation mode, the processor 200 is required to calibrate the first reference image and the second reference image. Specifically, the processor 200 first controls the structured light projector 21 to emit a laser pattern to the calibration plate in a scene without blocking by the display screen 10, and then controls the structured light camera 22 to receive the laser pattern directly incident after being reflected by the calibration plate to obtain the first reference image. The reference spots included in the first reference image are the first reference spots. The first reference spots are formed by the laser light diffracted by the diffractive optical element 213 when passing through the diffractive optical element 213, directly emitted to the calibration plate, and modulated and reflected by the calibration plate. Subsequently, the processor 200 calibrates the second reference image according to the reference image calibration method in the first calculation method. The second reference image includes both the first reference spots corresponding to the first measurement spots and the second reference spots corresponding to the second measurement spots. In a calibration scene of the first reference image and a calibration scene of the second reference image, the relative position between the calibration plate and the structured light projector 21 remains unchanged, the relative position between the calibration plate and the structured light camera 22 remains unchanged, and the relative position between the structured light projector 21 and the structured light camera 21 remains unchanged. Subsequently, the processor 200 marks the coordinates of the first reference spots in the first reference image, and filters out the first reference spots in the second reference image according to the coordinates of the first reference spot. The remaining reference spots in the second reference image are the second reference spots. In this way, the processor 200 can distinguish the first reference spots and the second reference spots among all reference spots of the second reference image.

As the depth data is calculated later, the measurement spots in the speckle image are also required to be distinguished. Specifically, the first measurement spots and the second measurement spots may be distinguished by brightness. It can be understood that the first measurement spots are formed by the laser light diffracted only by the diffractive optical element 213, and the second measurement spots are formed by the laser light diffracted by the diffractive optical element 213 and the display screen 10. That is, the number of times the laser light forming the second measurement spots is diffracted is greater than the number of times the laser light forming the first measurement spot is diffracted. Therefore, the energy loss of the laser light forming the first measurement spots is small, and the energy loss of the laser light forming the second measurement spots is large. The brightness of the second measurement spots will be lower than the brightness of the first measurement spots. As such, it is feasible to distinguish the first measurement spots and the second measurement spots based on the brightness. Therefore, after the reference image calibration is completed, it is necessary to further calibrate a preset brightness and a preset ratio for distinguishing the first measurement spots and the second measurement spots. Specifically, after the processor 200 distinguishes the first reference spots and the second reference spots, the processor 200 calculates an average value of the brightness of the first reference spots in the second reference image, and calculates an average value of the brightness of the second reference spots in the second reference image. Subsequently, the processor 200 takes the average value of the brightness of the first reference spots as the preset brightness, and takes the ratio between the average value of the brightness of the second reference spots and the average value of the brightness of the first reference spots as the preset ratio.

In the subsequent depth data calculation, the processor 200 first calculates the brightness of each measurement spot. Subsequently, the processor 200 calculates the actual ratio between each measurement spot and the preset brightness, and classifies the measurement spots of which the actual ratio is greater than or equal to the preset ratio as the first measurement spots, and classifies the measurement spots of which the actual ratio is less than the preset ratio as the second measurement spots, thereby distinguishing the first measurement spots and the second measurement spots. For example, as shown in FIG. 15, assuming that the preset ratio is 0.8, the speckle image captured by the structured light camera 22 in actual use includes measurement spot A and measurement spot B. If the ratio between the brightness of the measurement spot A and the preset brightness is less than 0.8, the measurement spot A is classified into the second measurement spots. That is, the measurement spot A is a measurement spot formed by a laser light diffracted by the diffractive optical element 213, diffracted again by the display screen 10, and reflected by the target object. If the ratio between the brightness of the measurement spot B and the preset brightness is greater than or equal to 0.8, then the measurement spot B is classified into the first measurement spots. That is, the measurement spot B is a measurement spot formed by laser light diffracted once by the diffractive optical element 213 and reflected by the target object. The preset ratio of 0.8 herein is only an example.

After the processor 200 distinguishes the first measurement spots and the second measurement spots, since the first reference spots and the second reference spots in the second reference image have also been distinguished, the processor 200 may calculate and obtain the depth data based on the speckle image and the second reference image. Specifically, the processor 200 first calculates the deviations of the first measurement spots relative to the first reference spots, and the deviation of the second measurement spots relative to the second reference spots. Subsequently, the processor 200 calculates multiple depth data based on the deviations, and the multiple depth data may constitute a depth image.

Compared with the first calculation method, the second calculation method distinguishes between the first measurement spots and the second measurement spots, and distinguishes between the first reference spots and the second reference spots. In this way, a more accurate deviation may be calculated and obtained based on a more accurate corresponding relationship between the first measurement spots and the first reference spots, and based on a corresponding relationship between the second measurement spots and the second reference spots. Further, more accurate depth data may be obtained, improving the accuracy of the obtained depth image.

In some embodiments, the preset brightness and the preset ratio are determined by the ambient brightness of the scene and the luminous power of the structured light projector 21. It can be understood that there is an infrared light component in the ambient light, and this infrared light component may be superimposed on the measurement spots such that the brightness of the measurement spots increases. The luminous power of the structured light projector 21 is closely related to the brightness of the measurement spots. When the luminous power is high, the brightness of the measurement spots is correspondingly higher. When the luminous power is low, the brightness of the measurement spots is correspondingly lower. Therefore, different ambient brightness and luminous power should have different preset brightness and preset ratio. The preset brightness and preset ratio under different ambient brightness and different luminous power may also be calibrated according to the foregoing calibration process. During the calibration process, the ambient brightness of the calibration scene and the luminous power of the structured light projector 21 are changed to obtain a preset brightness and a preset ratio corresponding to the ambient brightness and luminous power. The luminous power of the structured light projector 21 may be changed by changing a driving current of the light source 211. The corresponding relationship among the ambient brightness, the luminous power, the preset brightness and the preset ratio may be stored in the memory 300 (shown in FIG. 1) in the form of a mapping table. In the subsequent calculation of the depth image in the second calculation method, the processor 200 first obtains the ambient brightness and luminous power of the scene, searches the preset brightness and preset ratio corresponding to the current ambient brightness and luminous power in the mapping table, and distinguish the first measurement spots and the second measurement spots based on the searched preset brightness and preset ratio. In this way, the accuracy of the distinction between the first measurement spot and the second measurement spot may be improved.

In some embodiments, the diffractive optical element 213 is not only configured to diffract the laser light emitted by the light source 211 of the structured light projector 21 to increase the number of measurement spots or reference spots, but also to compensate the uniformity of the brightness of the laser pattern diffracted by the display screen 10, such that the uniformity of the brightness of the spots in the speckle pattern projected into the scene may be better, improving the accuracy of obtaining the depth image. Specifically, a convex or concave structures in the diffractive optical element 213 may be arranged densely in the middle and sparse on both sides, then the diffraction effect of the middle part of the diffractive optical element 213 is stronger than that of the edge part. In this way, the laser light incident on the middle part of the diffractive optical element 213 may be diffracted with more light beams, and the laser light incident on the edge part of the diffractive optical element 213 may be diffracted with less light beams, such that the brightness of the speckle pattern projected into the scene has high uniformity.

In summary, in the image obtaining method of the embodiments of the present disclosure, both the structured light projector 21 and the structured light camera 22 are disposed on a side at which the rear surface 13 of the display screen 10 is located, and the structured light camera 22 receives the modulated laser pattern through the through slot 14. The processor 200 may directly calculate the depth image based on the first measurement spots and the second measurement spots. Compared with the method of calculating the depth image based on only the first measurement spot, the diffraction effect of the display screen 10 increases the number of the measurement spots and randomness of the measurement spot arrangement, such that the accuracy of obtaining depth images may be improved. Further, the image obtaining method according to the embodiments of the present disclosure may appropriately simplify the complexity of the structure of the diffraction grating in the diffractive optical element 213, and in turn, the number of measurement spots and the randomness of the arrangement are increased by the diffraction effect of the display screen 10. While ensuring the accuracy of obtaining the depth image, the manufacturing process of the structured light projector 21 may be simplified.

Referring to FIG. 1, FIG. 7 and FIG. 14, in some embodiments, the structured light projector 21 and the structured light camera 22 are arranged together on a side at which the rear surface 13 of the display screen 10 is located. The display screen 10 defines the through slot 14 aligned with the light incident surface of the structured light camera 22. The structured light camera 22 receives modulated structured light passing through the through slot 14. The processor 200 may be configured to control the structured light camera 22 to receive a laser pattern diffracted by the display area 11 and reflected by the target object when the laser light emitting and directly incident to obtain a speckle image, filter out the second measurement spots in the speckle image to obtain the first measurement spots, and obtain the depth image based on the first measurement spots and reference spots in the reference image.

It should be noted that the speckle image includes a plurality of measurement spots. The plurality of measurement spots include first measurement spots and second measurement spots. The first measurement spots are formed by the laser light diffracted only by the diffractive optical element 213 and reflected by the target object. The second measurement spots are formed by the laser light diffracted by the diffractive optical element 213 once, diffracted by the display screen 10 again, and reflected by the target object. Specifically, the first measurement spots are formed by the laser light not diffracted by the display screen 10 when passing through the display screen 10 after being diffracted by the diffractive optical element 213 (that is, the laser light does not encounters a microscopic gap and is directly projected on the target object), and modulated and reflected by the target object. The second measurement spots are formed by the laser light diffracted by the display screen 10 when passing through the display screen 10 after being diffracted by the diffractive optical element 213 (that is, the laser light encounters the microscopic gap and is projected to the target object), and modulated and reflected by the target object.

Specifically, the structured light projector 21 and the structured light camera 22 are arranged together on a side at which the rear surface 13 of the display screen 10 is located. The display screen 10 defines the through slot 14 aligned with the light incident surface of the structured light camera 22. The structured light camera 22 captures the speckle image containing the first measurement spots and the second measurement spots. In the calculation of the subsequent depth image, the processor 200 may filter out the second measurement spots in the speckle image, and only calculate the depth image based on the remaining first measurement spots with the reference spots in the reference image. The reference spots in the reference image shall include only the first reference spots formed by the laser light diffracted only by the diffractive optical element 213 and reflected by the calibration object. Therefore, by filtering out the second measurement spots in the speckle image, the influence of the display screen 10 on the laser pattern may be eliminated, such that the accuracy of the depth image obtained by the electronic device 1000 may be higher while ensuring that screen occupation of the electronic device 1000 is relatively high.

That is to say, the processor 200 may also be configured to, when the reference image is calibrated, control the structured light camera 22 to receive the laser pattern directly reflected by the calibrated object after being emitted from the structured light projector 21 and directly incident to obtain a first reference image (hereby the first reference image includes a plurality of reference spots, and the plurality of reference spots include a plurality of first reference spots formed by laser light diffracted by the diffractive optical element 213 and reflected by the calibration object), calculate the deviations of the first measurement spots relative to the first reference spots, and calculate the depth data based on the deviations to obtain the depth image.

Specifically, after the processor 200 filters out the second measurement spots, only the first measurement spots remain in the speckle image. Then the calculation of the depth image shall be performed based on the speckle image and the first reference image containing only the first reference spots corresponding to the first measurement spots. The calibration process of the first reference image is the same as the calibration process in which the structured light projector 21 is in a scene without the blocking of the display screen 10, which will not be repeated here. The reference spots in the first reference image are the first reference spots formed by laser light diffracted only by the diffractive optical element 213 and reflected by the calibration object. In this way, the processor 200 may calculate the deviations of the first measurement spots relative to the first reference spots, and then calculate multiple depth data based on the deviations to obtain the depth image.

The processor 200 may filter out the second measurement spot by brightness. That is, in some embodiments, the processor 200 may also be configured to, when the reference image is calibrated, control the structured light camera 22 to receive the laser pattern directly reflected by the calibrated object after being emitted from the structured light projector 21 and directly incident to obtain a first reference image (hereby the first reference image includes a plurality of reference spots, and the plurality of reference spots include a plurality of first reference spots formed by laser light diffracted by the diffractive optical element 213 and reflected by the calibration object). The processor 200 may be further configured to, when the reference image is calibrated, control the structured light camera 22 to receive the laser pattern diffracted by the display area 11, reflected by the calibration object when being emitted, and directly incident to obtain a second reference image (hereby the second reference image includes a plurality of reference spots, and the plurality of reference spots include first reference spots and second reference spots. The first reference spots are formed by the laser light diffracted only by the diffractive optical element 213 and reflected by the calibration object. The second reference spots are formed by the laser light diffracted by the diffractive optical element 213 once, diffracted again by the display screen 10, and reflected by the calibration object). The processor 200 may be further configured to: compare the first reference image with the second reference image to obtain the second reference spots, calculate a ratio between an average value of the brightness of the second reference spots and an average value of the brightness of the first reference spots as a preset ratio, and calculate an average value of the brightness of the first reference spots as a preset brightness. The processor 200 may also be configured to calculate an actual ratio between each measurement spot and the preset brightness, classify the measurement spots of which the actual ratio is greater than the preset ratio as the first measurement spots, classify the measurement spots of which the actual ratio is less than the preset ratio as the second measurement spots, and filter out the second measurement spots among all the measurement spots to obtain the first measurement spots.

The calibration process of the first reference image is the same as the calibration process in which the structured light projector 21 is in a scene without the blocking of the display screen 10. The calibration process of the second reference image is the same as the calibration process in which the structured light projector 21 and the structured light camera 22 are arranged together on a side at which the rear surface 13 of the display screen 10 is located, and the display screen 10 defines the through slot 14 aligned with the light incident surface of the structured light camera 22. Details thereto will not be repeated here.

After the first reference image and the second reference image are obtained, the processor 200 may determine the first reference spots in the second reference image according to the coordinates of the first reference spots in the first reference image in the same manner as described above. The remaining reference spots are the second reference spots, thereby distinguishing the first reference spots and the second reference spots. Then, the processor 200 may calibrate and calculate the preset brightness and the preset ratio based on the distinguished first reference spots and second reference spots in the same manner as described above.

Similarly, in the subsequent calculation of the depth image, the processor 200 may distinguish the first measurement spots and the second measurement spots based on the calibrated preset ratio and the preset brightness, filter out the second measurement spots with only the first measurement spots remaining, calculate the deviations of the first measurement spots relative to the first reference spots, and finally calculate depth data based on the deviations, thereby obtaining the depth image.

In some embodiments, the preset brightness and the preset ratio are also determined by the ambient brightness of the scene and the luminous power of the structured light projector 21. In this way, the accuracy of filtering out the second measurement spots may be improved.

In some embodiments, the diffractive optical element 213 is not only configured to diffract the laser light emitted by the light source 211 of the structured light projector 21 to increase the number of measurement spots or reference spots, but also to compensate the uniformity of the brightness of the laser pattern diffracted by the display screen 10, such that the uniformity of the brightness of the spots in the speckle pattern projected into the scene may be better, improving the accuracy of obtaining the depth image.

In summary, in the electronic device 1000 of the embodiments, both the structured light projector 21 and the structured light camera 22 are disposed under the display screen 10. When the structured light camera 22 receives the modulated laser pattern passing through the through slot 14, the second measurement spots are first filtered out, and the depth image is calculated only based on the remaining first measurement spots, thereby reducing the data processing amount of the processor 200 and speeding up the process of obtaining the depth image.

Although the embodiments of the present disclosure have been shown and described above, it can be understood that the above-mentioned embodiments are exemplary and cannot be construed as limitations to the present disclosure. A person skilled in the art can make changes, amendments, replacements and modification to the embodiments, and the scope of the present disclosure is defined by the claims and their equivalents.

## Claims

1. An electronic device, comprising:
a self-luminous display screen, comprising a plurality of visible light sources and at least one infrared light source; and
a structured light assembly, comprising:
a structured light projector, configured to emit a laser pattern out of the electronic device; and
a structured light camera, configured to receive infrared light and/or the laser pattern reflected by a target object.

2. The electronic device according to claim 1, wherein the self-luminous display screen comprises a front surface and a rear surface opposite to each other; visible light emitted by the plurality of visible light sources is emitted from the front surface to an outside of the electronic device; the structured light assembly is disposed on a side at which the rear surface is located.

3. The electronic device according to claim 1, further comprising a housing; wherein the self-luminous display screen is disposed on the housing; the self-luminous display screen comprises a front surface, a rear surface, and a side surface; the front surface is opposite to the rear surface; the side surface connects the front surface and the rear surface; visible light emitted by the plurality of visible light sources is emitted from the front surface to an outside of the electronic device; the structured light assembly is disposed on the housing and on a side at which the side surface is located.

4. The electronic device according to any one of claims 1-3, wherein the self-luminous display screen is a micro LED display screen; the self-luminous display screen further comprises a drive substrate, a package substrate disposed opposite to the drive substrate, and a plurality of pixels disposed between the package substrate and the drive substrate; each of the plurality of pixels is arranged with a corresponding visible light source disposed therein; the at least one infrared light source is disposed among the plurality of visible light sources.

5. The electronic device according to claim 4, wherein the self-luminous display screen further comprises a support separating the drive substrate and the package substrate.

6. The electronic device according to claim 2, wherein the self-luminous display screen further comprises a display area and a non-display area; the non-display area is formed on a periphery of the display area; the structured light projector and the structured light camera are disposed on the side at which the rear surface of the self-luminous display screen is located and face the display area; the display area defines a through slot penetrating the front surface and the rear surface; the structured light camera is arranged facing the through slot.

7. The electronic device according to claim 6, wherein the through slot comprises a notch defined on an edge of the display screen.

8. The electronic device according to claim 6, wherein the through slot comprises a through hole spaced from an edge of the display screen.

9. The electronic device according to claim 6, wherein the display area comprises a first sub-display area and a second sub-display area connected to each other; a pixel density of the first sub-display area is less than a pixel density of the second sub-display area; the structured light projector is disposed on a side corresponding to the first sub-display area.

10. The electronic device according to claim 9, wherein the first sub-display area and the second sub-display area are independently controlled and displayed in different display states; the display states comprise brightness or refresh frequency.

11. The electronic device according to claim 9, further comprising a processor configured to reduce the brightness of the first sub-display area when the structured light projector emits the laser pattern; or, to adjust the refresh frequency of the first sub-display area such that turn-on time of the first sub-display area and turn-on time of the structured light projector are staggered.

12. The electronic device according to any one of claims 6-11, further comprising a cover plate and an infrared transmission layer; wherein the cover plate is disposed on the front surface of the self-luminous display screen;
the infrared transmission layer is disposed at an area of the cover plate corresponding to the through slot and/or an area of the cover plate corresponding to the structured light camera.

13. The electronic device according to of claim 12, further comprising a visible light camera disposed facing the through slot; wherein a visible light antireflection film and/or an infrared cut film is formed at an area of the cover plate corresponding to the through slot.

14. The electronic device according to of claim 2, further comprising an infrared antireflection film; wherein the infrared antireflection film is disposed at an area of the self-luminous display screen corresponding to the structured light projector, and/or at an area of the self-luminous display screen corresponding to the structured light camera.

15. The electronic device according to of claim 2, further comprising a cover plate and an infrared antireflection film; wherein the cover plate is disposed on the front surface of the self-luminous display screen; the infrared antireflection film is disposed at an area of the cover plate corresponding to the structured light projector and/or at an area of the cover plate corresponding to the structured light camera.

16. The electronic device according to of claim 2, wherein the at least one infrared light source and the plurality of visible light sources are controlled separately;
when the at least one infrared light source emits the infrared light, the structured light camera is configured to obtain an infrared image, and the plurality of visible light sources does not emit light to turn off the self-luminous display screen; or,
when the at least one infrared light source emits light, the structured light camera is configured to obtain the infrared image, and the plurality of visible light sources emit light to cause the self-luminous display screen to display images; or,
when the at least one infrared light source does not emit light, the plurality of visible light sources emit light to cause the display screen to display images.

17. The electronic device according to of claim 6, further comprising a processor;
wherein the structured light camera is configured to receive the laser pattern that is diffracted by the display area and reflected by the target object when the laser pattern emits and directly incident, such that a speckle image is obtained; the speckle image comprises a plurality of measurement spots comprising first measurement spots and second measurement spots; the first measurement spots are formed by laser light diffracted only by a diffractive optical element and reflected by the target object; the second measurement spots are formed by the laser light diffracted by the diffractive optical element once, diffracted by the self-luminous display screen again, and reflected by the target object;
the processor is configured to obtain a depth image based on the first measurement spots and the second measurement spots in the speckle image and reference spots in a reference image.

18. The electronic device according to of claim 6, further comprising a processor;
wherein the structured light camera is configured to receive the laser pattern that is diffracted by the display area and reflected by the target object when the laser pattern emits and directly incident, such that a speckle image is obtained; the speckle image comprises a plurality of measurement spots comprising first measurement spots and second measurement spots; the first measurement spots are formed by laser light diffracted only by a diffractive optical element and reflected by the target object; the second measurement spots are formed by the laser light diffracted by the diffractive optical element once, diffracted by the self-luminous display screen again, and reflected by the target object;
the processor is configured to filter out the second measurement spots in the speckle image to obtain the first measurement spots, and obtain a depth image based on the first measurement spots and reference spots in a reference image.

19. The electronic device according to claim 17 or 18, wherein the processor is further configured to determine whether a ratio of the brightness of a measured spot to a preset brightness is greater than a preset ratio; in response to the ratio of the brightness of the measured spot to the preset brightness being greater than the preset ratio, the measured spot is determined to be one of the first measurement spots; in response to the ratio of the brightness of the measured spot to the preset brightness being less than the preset ratio, the measured spot is determined to be one of the second measurement spots.

20. The electronic device according to claim 19, wherein the preset brightness and the preset ratio are determined based on an ambient brightness of a scene and a luminous power of the structured light projector.
